Europäisches Patentamt

European Patent Office

Office européen des brevets

(11) Publication number: **0 499 087 B1**

## EUROPEAN PATENT SPECIFICATION

(45) Date of publication of patent specification: **12.07.95**  (51) Int. Cl.⁶: **B01D 53/56**, B01D 53/62, B01D 53/72, B01J 29/06

(21) Application number: **92101391.8**

(22) Date of filing: **28.01.92**

(54) **Process for purifying exhaust gas.**

(30) Priority: **29.01.91 JP 9182/91**

(43) Date of publication of application:
**19.08.92 Bulletin 92/34**

(45) Publication of the grant of the patent:
**12.07.95 Bulletin 95/28**

(84) Designated Contracting States:
**DE FR GB NL**

(56) References cited:
**EP-A- 0 373 665**
**EP-A- 0 434 063**

(73) Proprietor: **TOSOH CORPORATION**
**No. 4560, Kaisei-cho,**
**Shinnanyo-shi**
**Yamaguchi-ken 746 (JP)**

Proprietor: **TOKYO GAS CO., LTD.**
**5-20, Kaigan 1-chome**
**Minato-ku**
**Tokyo 105 (JP)**

(72) Inventor: **Kawai, Yoshiaki**
**1-1-31, Miyanomae**
**Shinnanyo-shi,**
**Yamaguchi-ken (JP)**
Inventor: **Sekizawa, Kazuhiko**
**4-5-5-402, Madokoro**
**Shinnanyo-shi,**
**Yamaguchi-ken (JP)**

(74) Representative: **Tiedtke, Harro, Dipl.-Ing. et al**
**Patentanwaltsbüro**
**Tiedtke-Bühling-Kinne & Partner**
**Bavariaring 4**
**D-80336 München (DE)**

Rank Xerox (UK) Business Services
(3.10/3.09/3.3.3)

**Description**

Background of the Invention:

Field of the Invention:

The present invention relates to a process for purifying exhaust gas emitted from an internal combustion engine such as gas engines, particularly to a process for removing nitrogen oxides, carbon monoxide, and hydrocarbons from an exhaust gas containing oxygen in excess.

Description of the Related Art:

As the consequence of the recent serious environmental pollution, the removal of nitrogen oxides, carbon monoxide, hydrocarbons, etc. has come to be of great importance. The nitrogen oxides, for example, are emitted in large quantities from stationary sources such as industrial plants as well as various mobile sources typified by automobiles. The purifying of the exhaust gases is the important and urgent social problem.

With the increasing necessity of energy saving in recent years, cogeneration systems employing an internal combustion engine such as gas engines and gas turbines have come to be widely used. The purification of the exhaust gas containing nitrogen oxides, carbon monoxide, hydrocarbons, etc. emitted from such internal combustion engines is also of great importance.

For purifying the exhaust gas emitted from the aforementioned internal combustion engines, a catalytic process is known which employs a three-way catalyst composed of platinum, rhodium, and palladium, etc. supported by a carrier. This three-way catalyst, however, is incapable of removing nitrogen oxides from an oxygen-rich exhaust gas. Therefore a system for controlling an air-fuel ratio is additionally employed in combination with the three-way catalyst purifying system.

On the other hand, a lean burn system is developed for driving the internal combustion engine for the purposes of reducing fuel cost and decreasing carbon dioxide emission. In this lean burn system, the exhaust gas emitted therefrom is in a state of oxygen excess, which poses the problem that the three-way catalyst system is incapable of removing the nitrogen oxides from the oxygen-rich exhaust gas as mentioned above.

Therefore, a reductive denitration process with addition of ammonia is employed to remove the nitrogen oxides from such an oxygen-excess exhaust gas. The reductive denitration process, however, has disadvantages of a inevitable large scale of the apparatus and the danger in the use of ammonia, which restrict the application fields of the process.

Recently, zeolite type catalysts were disclosed which are capable of removing nitrogen oxides from an oxygen-excess exhaust gas without addition of a special reducing agent such as ammonia. For example, Japanese Laid-Open Patent Applications Sho 63-283727 and Hei 1-130735 disclose processes for removing nitrogen oxides with a zeolite catalyst having an ion-exchanged transition metal by utilizing, as a reducing agent, a minor amount of unburnt hydrocarbon remaining in the oxygen-excess exhaust gas.

However, the known zeolite type catalysts disclosed by the above Japanese Patent Laid-Open Applications and other literature were developed mainly for purifying the exhaust gas emitted from engines using liquid fuel, such as engines of automobiles. The exhaust gas emitted from the internal combustion engines using a liquid fuel contains hydrocarbons which is mostly composed of hydrocarbons of two or more carbons.

EP-A-0 434 063 (a document cited according to Article 54(3)EPC) teaches the use of a zeolite catalyst comprising cobalt for purifying oxygen-rich exhaust gases emitted from internal combustion engines such as diesel engines or gasoline engines using liquid fuels. There is no indication as to exhaust gases derived from internal combustion engines using gaseous fuels, comprising $C_1$ hydrocarbons and the problems involved thereto.

EP-A-0 373 665 comprises a method for cleaning an oxygen-rich exhaust gas comprising bringing the exhaust gas into contact with a crystalline alumino silicate, e.g. a zeolite, having a specific primary particle size and optionally containing cobalt. The exhaust gases to be treated are exhaust gases discharged from internal combustion engines of e.g. automobiles or factory boilers. However, there is also no indication as to the problems arising by the purification of $C_1$ hydrocarbon-containing exhaust gases derived from combustion engines using gaseous fuels.

On the other hand, in the internal combustion engines using a gaseous fuel, such as gas engines and gas turbines, the minor amount of hydrocarbon contained in the exhaust gas is mainly composed of methane having one carbon. The inventors of the present invention found that the simple use of the zeolite type catalyst of the prior art techniques is not effective for purifying the exhaust gas containing hydrocarbons mainly composed of methane having one carbon. In other words, the zeolite type catalysts are incapable of effectively removing nitrogen oxide from an oxygen-rich methane-containing exhaust gas.

The inventors of the present invention have made comprehensive study to solve the above-mentioned problems, and found that nitrogen oxides, carbon monoxide and hydrocarbons mainly composed of one-carbon hydrocarbon can be removed from an oxygen-rich exhaust gas by raising the hydrocarbon concentration in the exhaust gas by addition of hydrocarbon, or the like means, and then bringing the exhaust gas into contact with a zeolite catalyst containing cobalt, even if the exhaust gas contains hydrocarbon is mainly composed of $C_1$ hydrocarbon, and that the conversion can be raised particularly of nitrogen oxides. Thus the inventors completed the present invention.

Summary of the Invention:

The present invention intends to provide a process for removing effectively nitrogen oxides, carbon monoxide, and hydrocarbons from an exhaust gas in which the hydrocarbon component is mainly composed of $C_1$ hydrocarbon.

The present invention provides a process for purifying an oxygen-rich exhaust gas containing nitrogen oxides, carbon monoxide, and hydrocarbons composed of 80 vol% or more of $C_1$ hydrocarbon by removing the nitrogen oxides, the carbon monoxide, and the hydrocarbons, the process comprising bringing the exhaust gas into contact with a cobalt-containing zeolite catalyst with a hydrocarbon concentration in the exhaust gas maintained at a level in the range from 1000 ppm to 2 vol%.

The present invention further provides the above process further comprising adding a hydrocarbon to the exhaust gas in an amount sufficient to adjust the hydrocarbon concentration in the exhaust gas to 1000 ppm to 2 vol%.

Detailed Description of the Preferred Embodiment:

The present invention relates to a process for removing effectively nitrogen oxides, carbon monoxide, and hydrocarbons composed of 80 vol% or more of $C_1$ hydrocarbon from an exhaust gas containing them by bringing the exhaust gas with a cobalt-containing zeolite with a hydrocarbon concentration in the exhaust gas at a level in a range from 1000 ppm to 2 vol%, preferably from 2000 ppm to 1 vol% maintained by addition of hydrocarbon or other means. At the concentration of the hydrocarbon of lower than 1000 ppm, the NO removal degree is lower, while at the concentration of higher than 2 vol%, the production cost becomes higher or the hydrocarbon removal degree is lower.

The exhaust gas having been treated by the process of the present invention may further be passed through a platinum- or palladium-supporting catalyst to remove the remaining hydrocarbon.

The present invention is described below in more detail.

The zeolite is a crystalline aluminosilicate having a composition represented by the general formula:

$$xM_{2/n}O \bullet Al_2O_3 \bullet ySiO_2 \bullet zH_2O$$

(where n is a valency of a cation M, x is a numeral of from 0.8 to 1.2, y is a numeral of 2 or more, and z is a numeral of 0 or more). Various kinds of natural and synthetic zeolites are known. The kind of the zeolite used in the present invention is not specially limited, but has preferably a silica/alumina molar ratio of not less than 10. The typical examples are ferrierite, Y, mordenite, ZSM-5, ZSM-11, and the like, among which ZSM-5 is the most suitable. The zeolite may be used by itself without any treatment, or otherwise may be used after conversion to an $NH_4$ type or an H type by ion-exchange treatment by use of $NH_4Cl$, $NH_4NO_3$, $(NH_4)_2SO_4$, or the like. The zeolite may naturally contain another cation such as an alkali metal and an alkaline earth metal.

The exhaust-gas-purifying catalyst used in the present invention is characterized by the cobalt contained therein. The method of incorporating the cobalt is without limiting, and may be conducted by an ion-exchange method, impregnation method, or a like method.

In the incorporation by ion exchange, the procedure and the conditions are without limiting. For example, a zeolite is put into a solution containing cobalt ion, and the mixture is stirred at a temperature of from 20 to 100°C for several hours. The cobalt salt employed includes acetate, nitrate, oxalate, chloride, and the like.

3

The cobalt content in the zeolite is without limiting, but is preferably in a $CoO/Al_2O_3$ molar ratio from 0.2 to 2.5. At the $CoO/Al_2O_3$ molar ratio of lower than 0.2, the catalytic activity is insufficient, while at the $CoO/Al_2O_3$ molar ratio of higher than 2.5, the effect of the cobalt does not increase correspondingly.

The cobalt-containing zeolite may be subjected to preliminary treatment such as drying and calcination before use as the catalyst.

The cobalt-containing catalyst of the present invention may be in any shape and in any structure, and may be in a shape such as a powder shape, a pellet shape, a honeycomb shape, and so forth. The incorporation of the metal element may be conducted after the molding.

The exhaust gas purifying catalyst of the present invention may be molded into a desired form after addition of a binder such as alumina sol, silica sol, and clay, or otherwise it may be made into a slurry by adding water and applied onto a fire-resistant material such as alumina, magnesia, and cordierite in a honeycomb shape or other shapes before the use as the catalyst.

The catalyst of the present invention is directed to an oxygen-rich exhaust gas containing nitrogen oxides, carbon monoxide, and hydrocarbons composed of 80 vol% or more of $C_1$ hydrocarbon. In the present invention, the term "oxygen-rich exhaust gas" means an exhaust gas containing oxygen in excess of the amount that is required for completely oxidizing the reductive component such as carbon monoxide, and hydrocarbons in the exhaust gas. The hydrocarbon contained in the exhaust gas in the present invention is having $C_1$ hydrocarbon as the main component, where "having $C_1$ hydrocarbon as main component" means that 80 vol% or more of the hydrocarbon in the exhaust gas is the hydrocarbon having one carbon. Such exhaust gases typically include exhaust gases emitted from lean burn type of gas engines and gas turbines using town gas as the fuel.

Any kind of a hydrocarbon may be added to raise the hydrocarbon concentration. The catalyst of the present invention is capable of purifying effectively an exhaust gas even if the added hydrocarbon is methane or a hydrocarbon gas mixture composed mainly of methane, where the words "a hydrocarbon gas mixture composed mainly of methane" means a gas mixture in which 80 % or more of the hydrocarbon in the gas mixture is methane. Such gas mixture includes, for example, various town gases.

The concentration of the added hydrocarbon is without limiting, provided that the hydrocarbon concentration in the exhaust gas to be purified is adjusted to a level in the range from 1000 ppm to 2 vol%, preferably from 2000 ppm to 1 vol%. Although the amount of addition may be increased more, it leads to the increase of the cost or the decrease of the hydrocarbon conversion, and is undesirable. If the hydrocarbon concentration in the exhaust gas is sufficiently high, hydrocarbon need not be added.

The present invention is described below in more detail by reference to examples without limiting the invention in any way.

Example 1 (Preparation of Catalyst 1)

200 g of $NH_4$ type ZSM-5 zeolite having the silica/alumina ratio of 40 was put into 800 ml of aqueous 0.25M $Co(CH_3COO)_2 \cdot 4H_2O$ solution, and the mixture was stirred at 80 °C for 20 hours to allow ion-exchange to proceed. The solid matter was collected from the slurry by solid-liquid separation. The separated zeolite cake was again placed in an aqueous solution of the same composition as above, and the ion-exchange was conducted again. The treated zeolite was collected by solid-liquid separation. The separated zeolite was washed with 20 liters of pure water, and was dried at 110 °C for 10 hours. According to elemental analysis, the cobalt/alumina ratio of the resulting zeolite was 1.39.

Example 2 (Preparation of Catalyst 2)

Catalyst 2 was prepared in the same manner as in Example 1 except that aqueous 0.05 M $Co(NO_3)_2 \cdot 4H_2O$ solution was used in place of the aqueous 0.25 M $Co(CH_3COO)_2 \cdot 4H_2O$ solution. According to elemental analysis, the cobalt/alumina ratio of the zeolite was 0.34.

Example 3 (Preparation of Catalyst 3)

200 g of $NH_4$ type ZSM-5 having the silica/alumina ratio of 40 was put into 1800 ml of aqueous 1.09 M barium chloride solution, and the mixture was stirred at 80 °C for 16 hours. The treated zeolite was collected by solid-liquid separation, and washed with water sufficiently. Then the washed zeolite was put into 700 ml of aqueous 0.23 M $Co(NO_3)_2 \cdot 4H_2O$ solution, and the mixture was stirred at 80 °C for 16 hours. The solid matter was collected from the slurry by solid-liquid separation. The separated zeolite cake was again placed in an aqueous solution having the same composition as above, and the same procedure was conducted again. The treated zeolite was collected by solid-liquid separation. The separated zeolite was washed sufficiently with water, and was dried at 110 °C for 10 hours. Thus Catalyst 3 was prepared. According to elemental analysis, the barium/alumina ratio of the zeolite was 0.52, and the cobalt/alumina ratio was 0.32.

Comparative Example 1 (Preparation of Comparative Catalyst 1)

One kilogram of $NH_4$ type ZSM-5 of silica/alumina ratio of 40 was added to aqueous 0.1 M copper acetate solution to obtain the zeolite which has the atomic ratio of copper/aluminum of 1. Then aqueous 2.5 % ammonia was added thereto to adjust the pH value to 10.5, and the mixture was stirred at room temperature for 20 hours to allow the ion-exchange to proceed. This procedure was further repeated twice. The zeolite was washed and dried at 110 °C for 12 hours to prepare Comparative Catalyst 1. According to the chemical analysis the molar ratio of $CuO/Al_2O_3$ was 1.05.

Comparative Example 2 (Preparation of Comparative Catalyst 2)

20 g of $NH_4$ type ZSM-5 of silica/alumina ratio of 40 was put into 180 ml of aqueous 0.23 M nickel acetate tetrahydrate solution, and the mixture was stirred at 80 °C for 16 hours. The zeolite was collected by solid-liquid separation. The separated zeolite cake was treated again in the newly prepared aqueous solution having the same composition in the same manner as above. The zeolite was separated and washed with water sufficiently, and was dried at 110 °C for 10 hours to provide Comparative Catalyst 2. According to the chemical analysis, the molar ratio of $NiO/Al_2O_3$ was 1.40.

Example 4 (Catalyst Evaluation 1)

The Catalysts 1 to 3, and the Comparative Catalysts 1 and 2 were respectively pelletized, crushed, and graded into 12 to 20 mesh. 1.2 g of the graded catalyst was packed in an atmospheric-pressure fixed-bed reactor, and pre-treated with an air stream at 500 °C for 1 hour. Thereafter through the reactor packed with the catalyst, the gas was passed which has the composition shown in Table 1 (hereinafter referred to as a "reaction gas") to which 5000 ppm of a mixed hydrocarbon gas mainly composed of methane as shown in Table 2 was further added, at a total gas flow rate of 500 ml/min. The catalytic activity was measured at two temperature levels of 400 °C and 500 °C. The NO conversion and the methane conversion at the steady state at each temperature level were shown in Table 3. The CO conversion was approximately 100 % with any of the catalysts. The NO conversion was derived according to the formula below. The methane conversion was derived in a similar manner.

$$NO \text{ conversion } (\%) = (NO_{in} - NO_{out})/ NO_{in} \times 100$$

$NO_{in}$ :  NO concentration at the inlet of the reactor

$NO_{out}$ :  NO concentration at the outlet of the reactor

Table 1

| Composition of Reaction Gas | |
|---|---|
| NO | 600 ppm |
| CO | 500 ppm |
| $CH_4$ | 500 ppm |
| $CO_2$ | 7 vol% |
| $O_2$ | 5 vol% |
| $H_2O$ | 15 vol% |
| $N_2$ | Balance |

Table 2

| Mixed Gas Composition | |
|---|---|
| $CH_4$ | 88.0 vol% |
| $C_2H_6$ | 5.8 vol% |
| $C_3H_8$ | 4.4 vol% |
| $n-C_4H_{10}$ | 1.2 vol% |
| $i-C_4H_{10}$ | 0.5 vol% |

Table 3

| Catalyst Evaluation 1 (conversion: %) | 400 °C | | 500 °C | |
|---|---|---|---|---|
| | NO | $CH_4$ | NO | $CH_4$ |
| Catalyst 1 Co | 48 | 2 | 50 | 35 |
| Catalyst 2 Co | 50 | 2 | 60 | 25 |
| Catalyst 3 Co + Ba | 56 | 3 | 53 | 49 |
| Comparative Catalyst 1 Cu | 18 | 10 | 20 | 80 |
| Comparative Catalyst 2 Ni | 11 | 0 | 20 | 0 |

Example 5 (Catalyst Evaluation 2)

The catalytic activity was measured in the same manner as in Example 4 except that the gas passed through the reactor was the mixture of the reaction gas of Table 1 and 5000 ppm of methane. The NO conversion and the methane conversion at the steady state at each temperature level were shown in Table 4. The CO conversion was approximately 100 % with any of the catalysts.

Table 4

| Catalyst Evaluation 2 (conversion: %) | 400 °C | | 500 °C | |
|---|---|---|---|---|
| | NO | $CH_4$ | NO | $CH_4$ |
| Catalyst 1 Co | 24 | 1 | 34 | 30 |
| Catalyst 2 Co | 25 | 5 | 35 | 26 |
| Catalyst 3 Co + Ba | 21 | 6 | 33 | 31 |
| Comparative Catalyst 1 Cu | 7 | 5 | 10 | 80 |
| Comparative Catalyst 2 Ni | 8 | 0 | 12 | 5 |

Comparative Example 3 (Catalyst Evaluation 3)

The catalytic activity was measured in the same manner as in Example 4 except that the gas passed through the reactor was only the reaction gas of Table 1. The NO conversion and the methane conversion at the steady state at each temperature level were shown in Table 5. The CO conversion and the hydrocarbon conversion except the methane were approximately 100 % with any of the catalysts.

6

Table 5

| Catalyst Evaluation 3 (conversion: %) | | | | |
|---|---|---|---|---|
| | 400 °C | | 500 °C | |
| | NO | CH$_4$ | NO | CH$_4$ |
| Catalyst 1 Co | 2 | 18 | 10 | 100 |
| Catalyst 2 Co | 2 | 16 | 9 | 90 |
| Catalyst 3 Co + Ba | 3 | 21 | 11 | 100 |
| Comparative Catalyst 1 Cu | 15 | 15 | 8 | 100 |
| Comparative Catalyst 2 Ni | 7 | 0 | 11 | 10 |

Example 6 (Catalyst Evaluation 4)

The catalytic activity was measured in the same manner as in Example 4 except that the gas passed through the reactor was the mixture of the reaction gas of Table 1 and 2000 ppm of methane. The NO conversion and the methane conversion at the steady state at each temperature level were shown in Table 6. The CO conversion was approximately 100 % with any of the catalysts.

Table 6

| Catalyst Evaluation 4 (conversion: %) | | | | |
|---|---|---|---|---|
| | 400 °C | | 500 °C | |
| | NO | CH$_4$ | NO | CH$_4$ |
| Catalyst 1 Co | 4 | 7 | 20 | 40 |
| Catalyst 2 Co | 5 | 8 | 22 | 38 |
| Catalyst 3 Co + Ba | 3 | 12 | 21 | 41 |
| Comparative Catalyst 1 Cu | 4 | 5 | 7 | 80 |
| Comparative Catalyst 2 Ni | 6 | 0 | 8 | 3 |

From the results shown in Tables 3 to 6, it is clear that the use of the cobalt-containing zeolite as the catalyst and the addition of hydrocarbon to an exhaust gas according to the present invention make it feasible to purity nitrogen oxide, carbon monoxide, and hydrocarbons mainly composed of methane at higher conversion thereof from an oxygen-excess exhaust gas containing them. Accordingly the present invention is of great significance in environmental protection.

Nitrogen oxides, carbon monoxide, and hydrocarbons are purified from an oxygen-excess exhaust gas containing nitrogen oxides, carbon monoxide, and hydrocarbons composed of 80 vol% or more of C$_1$ hydrocarbon. The purification of these substances is conducted by adjusting the hydrocarbon concentration in the exhaust gas to be within the range of from 1000 ppm to 2 vol% by addition of a hydrocarbon or other means, and then bringing the exhaust gas into contact with a cobalt-containing zeolite catalyst.

**Claims**

1. A process for purifying an oxygen-excess exhaust gas containing nitrogen oxides, carbon monoxide, and hydrocarbons composed of 80 vol% or more of C$_1$ hydrocarbon by removing the nitrogen oxides, the carbon monoxide, and the hydrocarbons, the process comprising bringing the exhaust gas into contact with a cobalt-containing zeolite catalyst with a hydrocarbon concentration in the exhaust gas being maintained at a level in a range from 1000 ppm to 2 vol%.

2. A process for purifying an oxygen-excess exhaust gas containing nitrogen oxides, carbon monoxide and hydrocarbons composed of 80 vol% or more of C$_1$ hydrocarbon by removing the nitrogen oxides, the carbon monoxide, and the hydrocarbons, the process comprising adding a hydrocarbon further to the exhaust gas in an amount sufficient to adjust the hydrocarbon concentration in the exhaust gas to

7

1000 ppm to 2 vol%, and bringing the exhaust gas into contact with a cobalt-containing zeolite catalyst.

3. The process according to claim 2, wherein the hydrocarbon added is methane or a mixture gas of hydrocarbons, in which 80 vol% or more of the hydrocarbon is methane.

4. The process according to claim 1, wherein the cobalt-containing zeolite catalyst has a $CoO/Al_2O_3$ molar ratio between 0.2 and 2.5.

**Patentansprüche**

1. Verfahren zur Reinigung eines Abgases, das einen Sauerstoffüberschuß aufweist und Stickstoffoxide, Kohlenmonoxid und Kohlenwasserstoffe enthält, die zu 80 Vol.-% oder mehr aus $C_1$-Kohlenwasserstoff bestehen, mittels der Entfernung der Stickstoffoxide, des Kohlenmonoxids und der Kohlenwasserstoffe, wobei das Verfahren das In-Kontakt-Bringen des Abgases mit einer Kohlenwasserstoffkonzentration in dem Abgas, die auf einem Niveau in einem Bereich von 1000 ppm bis 2 Vol.-% gehalten wird, mit einem kobalthaltigen Zeolithkatalysator umfaßt.

2. Verfahren zur Reinigung eines Abgases, das einen Sauerstoffüberschuß aufweist und Stickstoffoxide, Kohlenmonoxid und Kohlenwasserstoffe enthält, die zu 80 Vol.-% oder mehr aus $C_1$-Kohlenwasserstoff bestehen, mittels der Entfernung der Stickstoffoxide, des Kohlenmonoxids und der Kohlenwasserstoffe, wobei das Verfahren ferner die Zugabe eines Kohlenwasserstoffs zu dem Abgas in einer Menge, die ausreicht, um die Kohlenwasserstoffkonzentration in dem Abgas auf 1000 ppm bis 2 Vol.-% einzustellen, und das In-Kontakt-Bringen des Abgases mit einem kobalthaltigen Zeolithkatalysator umfaßt.

3. Verfahren nach Anspruch 2, wobei der zugefügte Kohlenwasserstoff Methan oder ein Mischgas aus Kohlenwasserstoffen ist, in dem 80 Vol.-% oder mehr des Kohlenwasserstoffs aus Methan besteht.

4. Verfahren nach Anspruch 1, wobei der kobalthaltige Zeolithkatalysator ein $CoO/Al_2O_3$-Molverhältnis zwischen 0,2 und 2,5 aufweist.

**Revendications**

1. Procédé pour purifier un gaz d'échappement qui contient un excès d'oxygène, contenant des oxydes d'azote, du monoxyde de carbone et des hydrocarbures composés de 80 % en volume ou plus d'hydrocarbure en $C_1$ par élimination des oxydes d'azote, du monoxyde de carbone et des hydrocarbures, le procédé comprenant la mise en contact du gaz d'échappement avec un catalyseur de zéolite contenant du cobalt, avec la concentration d'hydrocarbure dans le gaz d'échappement qui est maintenue à un niveau se situant dans la gamme de 1000 ppm à 2 % en volume.

2. Procédé pour purifier un gaz d'échappement qui contient de l'oxygène en excès, contenant des oxydes d'azote, du monoxyde de carbone et des hydrocarbures composés de 80 % en volume ou plus d'hydrocarbure en $C_1$ par élimination des oxydes d'azote, du monoxyde de carbone et des hydrocarbures, le procédé comprenant l'addition d'un hydrocarbure supplémentaire au gaz d'échappement dans une quantité suffisante pour ajuster la concentration en hydrocarbure dans le gaz d'échappement de 1000 ppm à 2 % en volume, et la mise en contact du gaz d'échappement avec un catalyseur de zéolite contenant du cobalt.

3. Procédé selon la revendication 2, dans lequel l'hydrocarbure ajouté est du méthane ou un mélange de gaz d'hydrocarbures dans lequel 80 % en volume ou plus de l'hydrocarbure est du méthane.

4. Procédé selon la revendication 1, dans lequel le catalyseur de zéolite contenant du cobalt a un rapport molaire $CoO/Al_2O_3$ compris entre 0,2 et 2,5.